# EUROPEAN PATENT APPLICATION

(11) **EP 4 243 256 A1**
(43) Date of publication of application: **13.09.2023**
(21) Application number: 23155306.6
(22) Date of filing: 07.02.2023
(51) Int. Cl.: H02K 15/095

(54) **WINDING METHOD, WINDING STRUCTURE, AND WINDING APPARATUS OF RECTANGULAR WIRE**

(30) Priority: 11.03.2022 JP 2022038051
(71) Applicant: Mitsuba Corporation, Kiryu-shi, Gunma 376-8555 (JP)
(72) Inventor: OHKAWARA, Tomoki, Kiryu-shi, Gunma, 3768555 (JP); ISHIDA, Takahito, Kiryu-shi, Gunma, 3768555 (JP); FUKUSHIMA, Yusuke, Kiryu-shi, Gunma, 3768555 (JP); SUGIYAMA, Masayuki, Kiryu-shi, Gunma, 3768555 (JP)
(74) Representative: Kurig, Thomas

(57) **Abstract**

The disclosure improves stability of winding with a simple configuration. A winding method of a rectangular wire (11), which forms a coil (6) by winding the rectangular wire (11) around a tooth portion (8) that extends inward in a motor radial direction from a yoke portion (7) outside the motor radial direction, wherein, when the rectangular wire (11) is wound around an inclined winding region (30) that is a partial region of the coil (6), the rectangular wire (11) is wound in a state in which a width direction of the rectangular wire (11) is inclined with respect to the motor radial direction.

## Description

### BACKGROUND

### Technical Field

The disclosure relates to a winding method, a winding structure, and a winding apparatus of a rectangular wire.

### Description of Related Art

Generally, performance of a brushless motor or the like that is configured of a rotor in which a magnet is provided and a stator on which winding wires are wound can be improved by increasing the density (a space factor) of the winding wires wound on teeth of the stator. Here, in order to increase the space factor, there is a case in which a winding wire configured of a so-called rectangular wire having a substantially rectangular cross section is used. Due to characteristics of a shape thereof, the rectangular wire can reduce a gap between the winding wires in the stator compared to a round wire, and thus the space factor can be further improved.

For example, Patent Document 1 discloses a technique of winding a rectangular wire formed from a round wire around teeth of a split core.

### Patent Documents

[Patent Document 1] Japanese Patent Laid-Open No. 2014-166102

### SUMMARY

However, unlike a round wire, since a rectangular wire cannot be wound in a bale shape, there is a risk that the rectangular wire will shift laterally during winding, resulting in collapse of the winding. In addition, when the rectangular wire is wound, an edge portion (a corner portion) of the rectangular wire tends to interfere with adjacent rectangular wires, or the like, and thus it is difficult to perform stable winding.

Thus, the disclosure provides a winding method, a winding structure, and a winding apparatus of a rectangular wire that can improve stability when a rectangular wire is wound.

In order to solve the above problems, a first aspect of the disclosure is a winding method of a rectangular wire, which includes forming a coil by winding the rectangular wire around a tooth portion that extends inward in a motor radial direction from a yoke portion located outward in the radial direction, wherein, when the rectangular wire is wound around a partial region of the coil, the rectangular wire is wound in a state in which a width direction of the rectangular wire is inclined with respect to the radial direction.

According to a second aspect of the disclosure, in the winding method of the rectangular wire of the first aspect, the partial region of the coil is a region provided on at least one end side in the radial direction of at least one layer of the coil.

According to a third aspect of the disclosure, in the winding method of the rectangular wire of the first or second aspect, the partial region of the coil is provided in a layer wound from one side of the coil to the other side in the radial direction, and when the rectangular wire is wound around the partial region of the coil, the rectangular wire is wound in an inclined state so that the one side of the rectangular wire is located closer to the tooth portion than the other side.

A fourth aspect of the disclosure is a winding structure of a rectangular wire, including an iron core having a yoke portion disposed outward in a radial direction and configured to extend in a motor circumferential direction, a tooth portion configured to extend inward in the radial direction from a middle portion of the yoke portion in the motor circumferential direction, and a flange portion configured to extend from an inner end portion of the tooth portion in the radial direction to both sides thereof in the motor circumferential direction, and a coil disposed in a slot defined by the yoke portion, the tooth portion, and the flange portion of the iron core and formed by winding the rectangular wire in multiple layers around the tooth portion, wherein the rectangular wire on at least one end side in the radial direction of at least one layer of the coil is formed so that a width direction of the rectangular wire is inclined with respect to the radial direction.

A fifth aspect of the disclosure is a winding apparatus for winding a rectangular wire around a tooth portion of an iron core, including an iron core support part configured to support the iron core, and a winding wire supply part configures to supply the rectangular wire toward the iron core supported by the iron core support part, wherein the winding wire supply part is configured to tilt the rectangular wire in a circumferential direction of the rectangular wire.

According to the disclosure, it is possible to improve stability when a rectangular wire is wound.

### BRIEF DESCRIPTION OF THE DRAWINGS

FIG. 1 is a perspective view of a motor to which a winding method and a winding structure of a rectangular wire according to an embodiment of the disclosure are applied.
FIG. 2 is a side view of a split core of the motor of FIG. 1 in a motor circumferential direction.
FIG. 3 is a cross-sectional view along line III-III in FIG. 2.
FIG. 4 is a schematic diagram showing a configuration of a winding apparatus according to an embodiment of the disclosure.
FIG. 5 is an explanatory diagram for describing movement of a nozzle.
FIG. 6 is a diagram showing a procedure for winding the rectangular wire of the first layer around a split core.
FIG. 7 is a diagram showing a procedure for winding the rectangular wire of the second layer around the split core.
FIG. 8 is a diagram showing a procedure for winding the rectangular wire of the third layer around the split core.
FIG. 9 is a diagram showing a procedure for winding the rectangular wire of the fourth layer around the split core.
FIG. 10 is a diagram showing a procedure for winding the rectangular wire of the fifth layer around the split core.

### DESCRIPTION OF THE EMBODIMENTS

Hereinafter, an embodiment of the disclosure will be described with reference to the drawings. In each of the drawings, X indicates an axial direction of a motor (hereinafter referred to as a "motor axial direction"), Y indicates an inner side in a radial direction of the motor (hereinafter referred to as a "motor radial direction"), and Z indicates a circumferential direction of the motor (hereinafter referred to as a "motor circumferential direction").

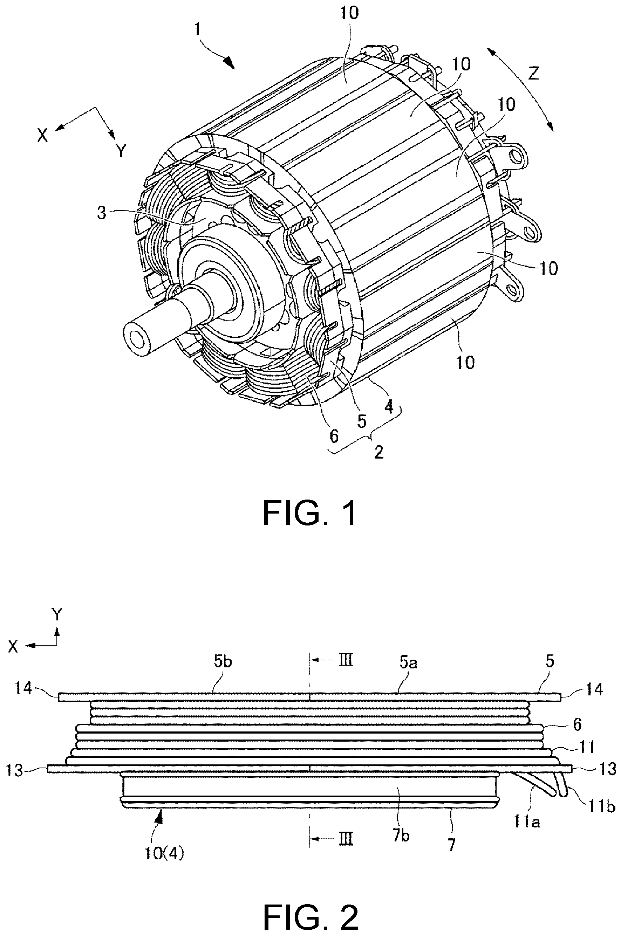

FIG. 1 is a perspective view of a motor 1 to which a winding method and a winding structure of a rectangular wire according to an embodiment of the disclosure are applied.

As shown in FIG. 1, the winding method and the winding structure of the rectangular wire according to the disclosure are applied to, for example, a winding method and a winding structure of a rectangular wire for a stator 2 of a brushless motor 1 (a rotating electric machine). The brushless motor 1 (hereinafter referred to as a "motor 1") has a stator 2 press-fitted into a housing (not shown), and a rotor 3 disposed inside the stator 2 in the motor radial direction and provided to be rotatable with respect to the stator 2.

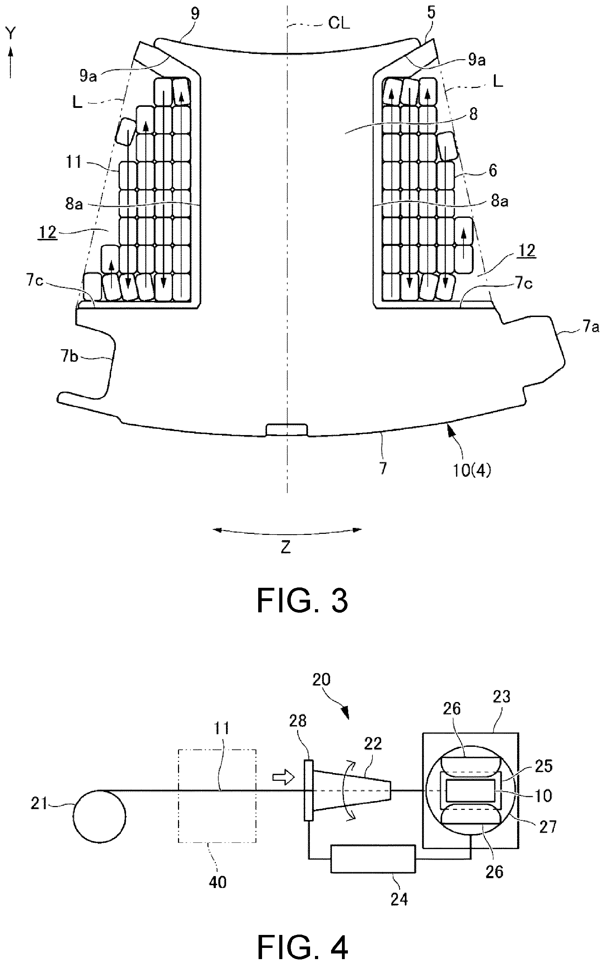

The stator 2 includes a stator core (an iron core) 4, an insulating insulator 5 (refer to FIGS. 2 and 3) mounted on the stator core 4, and coils 6. The stator core 4 of this embodiment is a split-core type stator core 4 that is split in the motor circumferential direction, and is formed by annularly connecting a plurality of split cores (iron cores) 10 in the motor circumferential direction (a Z direction).

FIG. 2 is a side view of the split core 10 of the motor 1 of FIG. 1 in the motor circumferential direction. FIG. 3 is a cross-sectional view along line III-III in FIG. 2. Arrows on the coil 6 in FIG. 3 indicate directions in which the winding wires of each layer of the coil 6 are wound. In addition, an alternating long and short dash line in FIG. 3 represents a center line CL of the split core 10 in the motor circumferential direction. In the following description, the inner side in the motor circumferential direction is the center line CL side of the split core 10 in the motor circumferential direction, and the outer side in the motor circumferential direction is a direction away from the center line CL in the motor circumferential direction.

As shown in FIGS. 2 and 3, the split core 10 of the stator core 4 includes a yoke portion 7 having a substantially arcuate cross section that extends in the motor circumferential direction from the outside in the motor radial direction (a Y direction), a tooth portion 8 that extends from the yoke portion 7 inward in the motor radial direction, and flange portions 9 that extend from an inner end portion of the tooth portion 8 in the motor radial direction to both sides in the motor circumferential direction. In this embodiment, the split core 10 is formed by stacking a plurality of metal plates in the motor axial direction (an X direction), for example, and extends linearly in the motor axial direction. In a state in which the stator core 4 is formed by annularly connecting a plurality of split cores 10 in the motor circumferential direction, the yoke portion 7 constitutes a back yoke that has a substantially cylindrical shape and forms an annular magnetic path. The coil 6 of this embodiment is formed by winding a rectangular wire 11 around the tooth portion 8. The split core 10 may have a skew angle that is inclined with respect to a length direction (the motor axial direction) of the split core 10.

Connecting portions 7a and 7b for connecting adjacent split cores 10 are formed at both end portions of the yoke portion 7 in the motor circumferential direction. One connecting portion 7a extends in the motor axial direction while protruding outward in the motor circumferential direction. The other connecting portion 7b is formed in the form of a groove extending in the motor axial direction, is recessed inward in the motor circumferential direction, and is engageable with the one connecting portion 7a. The stator core 4 can be formed by engaging the connecting portions 7a and 7b at both end portions of the yoke portion 7 in the motor circumferential direction with the connecting portions 7b and 7a of the yoke portions 7 of the other split cores 10 adjacent to both sides in the motor circumferential direction and thus connecting the plurality of split cores 10.

The tooth portion 8 extends in the motor axial direction while extending (protruding) inward in the motor radial direction (toward a rotation center of the motor 1) from a middle portion (substantially the center in this embodiment) of an inner peripheral surface of the yoke portion 7 in the motor circumferential direction. Side surfaces 8a and 8a on both sides of the tooth portion 8 in the motor circumferential direction are disposed parallel to each other. In this embodiment, inner side surfaces 7c and 7c of the yoke portion 7 in the motor radial direction located on both sides of the tooth portion 8 in the motor circumferential direction are formed in a planar shape orthogonal to the motor radial direction. The inner side surfaces 7c and 7c of the yoke portion 7 may be in a so-called overhanging state and face inward in the motor radial direction as they are separated from the tooth portion 8 outward in the motor circumferential direction.

The flange portion 9 extends in the motor axial direction while extending (protruding) from the inner end portion of the tooth portion 8 in the motor radial direction to both sides in the motor circumferential direction. In this embodiment, outer side surfaces 9a and 9a of the flange portions 9 in the motor radial direction located on both sides of the tooth portion 8 in the motor circumferential direction are inclined with respect to a plane orthogonal to the motor radial direction and face inward in the motor radial direction as they are separated from the tooth portion 8 outward in the motor circumferential direction.

A pair of slots 12 for winding the rectangular wire 11 forming the coil 6 is defined on both sides of the tooth portion 8 in the motor circumferential direction by the yoke portion 7, the tooth portion 8 and the flange portions 9. That is, the slots 12 are located inside a virtual line that connects an end portion of the yoke portion 7 in the motor circumferential direction to an end portion of the flange portion 9 in the motor circumferential direction (a two point chain line L in FIG. 3). The pair of slots 12 of this embodiment expands inward in the motor radial direction according to an inclination of the outer side surfaces 9a and 9a of the flange portions 9 as they are separated from the tooth portion 8 in the motor circumferential direction.

The insulator 5 is mounted in the split core 10 so as to cover a periphery of the tooth portion 8. The insulator 5 has two insulators 5a and 5b on both sides in the motor axial direction. The two insulators 5a and 5b are mounted in the split core 10 so as to sandwich the tooth portion 8 from both sides in the motor axial direction. The insulator 5 covers portions (the inner side surfaces 7c and 7c of the yoke portion 7, the side surfaces 8a and 8a of the tooth portion 8, and the outer side surfaces 9a and 9a of the flange portion 9) of the split core 10 facing the slots 12 and also covers end portions of the tooth portion 8 on both sides in the motor axial direction. Wall portions 13 and 14 that protrude in the motor axial direction from both sides in the motor radial direction are provided at portions of the insulator 5 that cover the end portions of the tooth portion 8 in the motor axial direction. The rectangular wire 11 forming the coil 6 is wound between the wall portions 13 and 14 on both sides of the insulator 5 in the motor radial direction. Two slits (not shown) for locking an end portion 11a of the rectangular wire 11 on the winding start side with an end portion 11b thereof on the winding end side are formed in the wall portion 13 on one side of the insulator 5 in the motor axial direction and on the outer side in the motor radial direction.

The rectangular wire 11 is a winding wire having a substantially rectangular cross section, and is wound in multiple layers around the tooth portions 8 of the split core 10 from above the insulator 5 in a state in which the end portion 11a on the winding start side is locked in the slit (not shown) of the wall portion 13 of the insulator 5. The rectangular wire 11 is wound so as to be inserted into one slot 12 of the split core 10, to pass through a space between the wall portions 13 and 14 of the insulator 5 on one side of the tooth portion 8 in the motor axial direction, to be inserted into the other slot 12 of the split core 10, and to pass through a space between the wall portions 13 and 14 of the insulator 5 on the other side of the tooth portion 8 in the motor axial direction. After the rectangular wire 11 is wound, the end portion 11b of the rectangular wire 11 on the winding end side is locked into the slit (not shown) of the wall portion 13 of the insulator 5. In this embodiment, the rectangular wire 11 is wound so that a winding layer thereof becomes five layers. A method for winding the rectangular wire 11 will be described later.

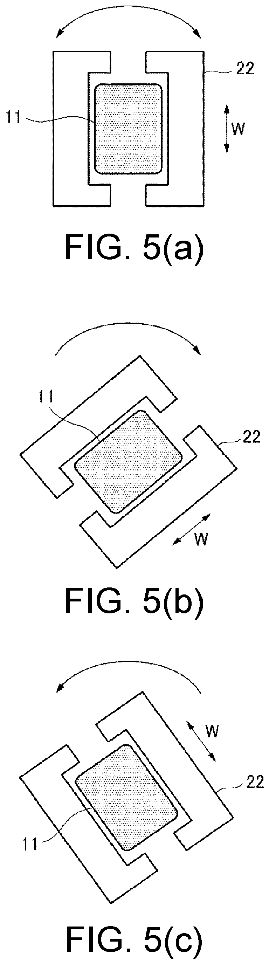

Next, a winding apparatus 20 according to one embodiment of the disclosure will be described. FIG. 4 is a schematic diagram showing a configuration of the winding apparatus 20 according to one embodiment of the disclosure. FIG. 5 is an explanatory diagram for describing movement of a nozzle 22, (a) shows a state in which the nozzle 22 is located at a normal position, (b) shows a state in which the nozzle 22 is located at an inclined position on one side in the circumferential direction, and (c) shows a state in which the nozzle 22 is located at an inclined position on the other side in the circumferential direction. FIG. 5 shows a state in which the nozzle 22 is seen from the downstream side of the rectangular wire 11.

The winding apparatus 20 is an apparatus that winds the rectangular wire 11 around the tooth portion 8 of the split core 10 to form the coil 6. As shown in FIG. 4, the winding apparatus 20 includes a nozzle (a winding wire supply part) 22 that supplies the rectangular wire 11 fed from the reel 21 side in a direction of a white arrow to the split core 10 side, a winding machine 23 that winds the rectangular wire 11 supplied from the nozzle 22 around the split core 10, and a control part 24.

The rectangular wire 11 may be a rectangular wire 11 wound around a reel 21 in advance in a state in which a cross section thereof is substantially rectangular, or may be formed by machining a round wire fed from the reel 21 into the rectangular wire 11 having a rectangular cross section before reaching the nozzle 22. For example, as indicated by a two point chain line in FIG. 4, a molding machine 40 for machining and molding the round wire fed from the reel 21 into the rectangular wire 11 may be provided on a path between the reel 21 and the nozzle 22. Further, in this embodiment, the stator core 4 is exemplified as a winding target, but the winding target is arbitrary, and it is also applicable to an armature core or the like. Moreover, the disclosure is also applicable to a case in which a coil is wound around a non-magnetic material, and a function and an application of the coil are arbitrary.

The winding machine 23 includes a core support part (an iron core support part) 25 capable of supporting the split core 10, a pair of guide members 26 that guides the rectangular wire 11 to the slot 12 of the split core 10, and a rotating mechanism 27 that rotates the core support part 25 and the pair of guide members 26. For example, the core support part 25 sandwiches the yoke portion 7 of the split core 10 from both sides in the motor circumferential direction. The core support part 25 can rotate the split core 10 around a rotation axis extending along the motor radial direction while supporting the split core 10. The rotating mechanism 27 is controlled by the control part 24 to integrally rotate the core support part 25 and the pair of guide members 26. Each of the guide members 26 can move independently of each other in the motor circumferential direction and the motor radial direction with respect to the split core 10 supported by the core support part 25. Each of the guide members 26 moves in the motor circumferential direction and the motor radial direction with respect to the split core 10 supported by the core support part 25 to guide the rectangular wire 11 to a predetermined position in the slot 12 of the split core 10.

As shown in FIGS. 4 and 5, the nozzle 22 supplies the rectangular wire 11 to the split core 10 side supported by the core support part 25 of the winding machine 23. The rectangular wire 11 is pulled out of the nozzle 22 and the rectangular wire 11 is wound around the tooth portion 8 of split core 10 by rotating split core 10 with the rotating mechanism 27 of winding machine 23. The nozzle 22 has a tilting mechanism 28 capable of tilting in a circumferential direction of the rectangular wire 11 (hereinafter, referred to as a "wire circumferential direction"). The tilting mechanism 28 is controlled by the control part 24 to tilt the nozzle 22 in the wire circumferential direction. In this embodiment, the tilting mechanism 28 tilts the nozzle 22 in the wire circumferential direction around a center of the cross section of the rectangular wire 11. As the nozzle 22 is tilted in the wire circumferential direction, the rectangular wire 11 supplied from the nozzle 22 is also tilted in the wire circumferential direction. That is, the nozzle 22 can tilt the rectangular wire 11 in the wire circumferential direction. The nozzle 22 is tiltable between a normal position (refer to FIG. 5(a)) in which the rectangular wire 11 is supplied so that a width direction W of the rectangular wire 11 is along the motor radial direction of the split core 10 supported by the core support part 25 and inclined positions (refer to FIGS. 5(b) and 5(c)) on both sides in the wire circumferential direction at which the rectangular wire 11 is supplied so that the width direction W of the rectangular wire 11 is inclined with respect to the motor radial direction of the split core 10. The rectangular wire 11 supplied from the nozzle 22 is guided by the pair of guide members 26 to a predetermined position in the slot 12 of the split core 10.

A timing at which the nozzle 22 is tilted can be recognized from an operating state of the rotating mechanism 27 that rotates the core support part 25 of the winding machine 23. That is, the timing at which the nozzle 22 is tilted can be managed by a rotation angle (the number of rotations) of the split core 10 from start of a winding operation. Since the rotation angle of the split core 10 is defined by an operation of the rotating mechanism 27, the control part 24 that controls the rotating mechanism 27 can grasp a winding state of the winding wires in real time. For example, as indicated by the arrows in FIG. 3, the winding of the first layer (the innermost layer in the motor circumferential direction) of the rectangular wire 11 is completed by rotating the split core 10 about 8 times after the winding of the first layer of the rectangular wire 11 starts, and then the winding of the rectangular wire 11 proceeds to the second layer (a layer outside the first layer in the motor circumferential direction). Similarly, the winding of each layer is completed by rotating the split core 10 about eight times for the second and third layers, about six times for the fourth layer, and about two times for the fifth layer. Thus, the control part 24 controls the tilting mechanism 28 of the nozzle 22 to tilt the nozzle 22 at a desired timing based on the rotation angle of the split core 10 recognized through the operating state of the rotating mechanism 27. The desired timing at which the nozzle 22 is tilted will be described below.

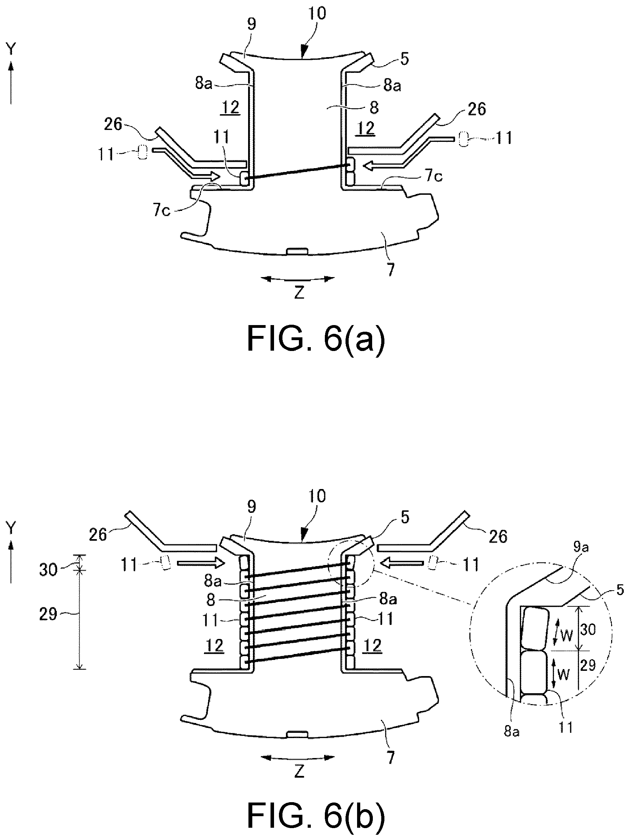

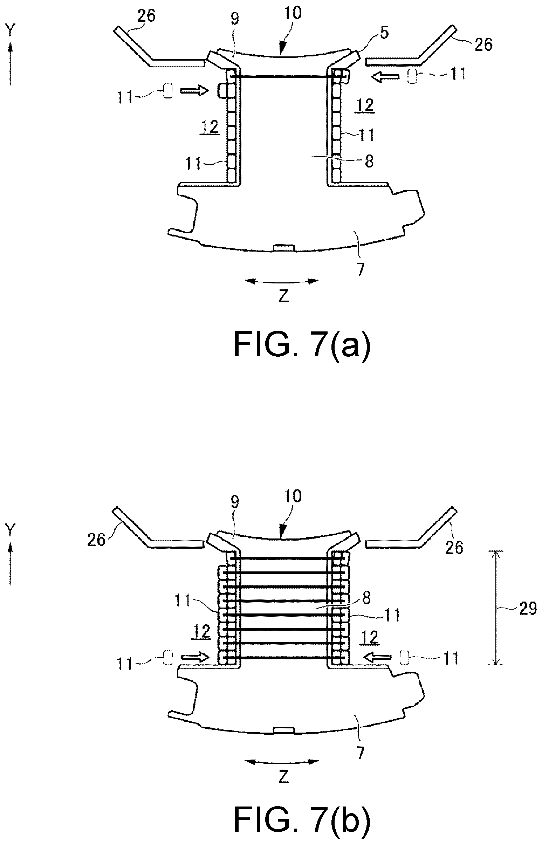

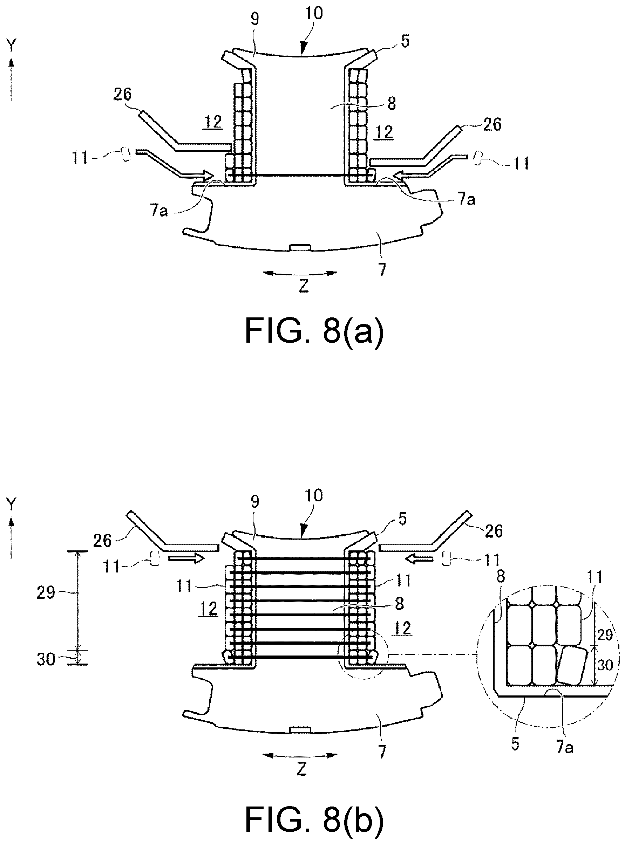

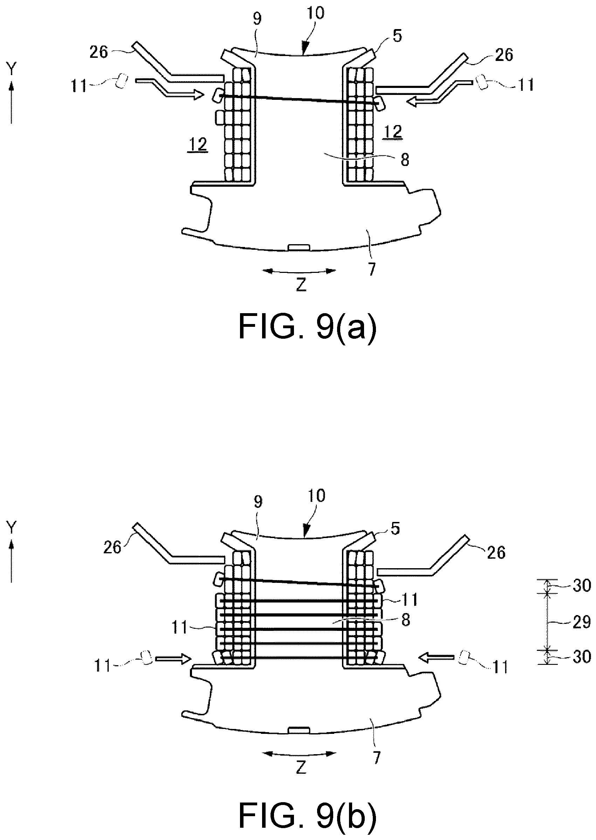

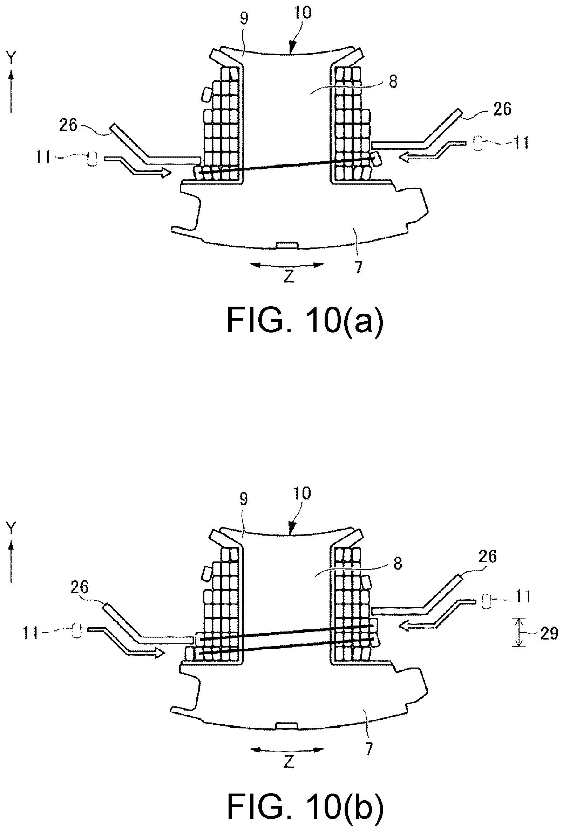

Next, a method for winding a rectangular wire according to this embodiment will be described. FIGS. 6 to 10 are diagrams for describing a procedure for winding the rectangular wire 11 around the split core 10, FIG. 6 shows the first layer, FIG. 7 shows the second layer, FIG. 8 shows the third layer, FIG. 9 shows the fourth layer, and FIG. 10 shows the fifth layer. Further, in FIGS. 6 to 10, (a) shows the state at the start of winding, and (b) shows the state at the end of winding.

In FIGS. 6 to 10, the slot 12 located on the left side of the tooth portion 8 will be referred to as a left slot 12, and the slot 12 located on the right side of the tooth portion 8 will be referred to as a right slot 12 for explanation. Further, in FIGS. 6 to 10, the guide member 26 located on the left side of the tooth portion 8 will be referred to as a left guide member 26, and the guide member 26 located on the right side of the tooth portion 8 will be referred to as a right guide member 26. Further, in FIGS. 6 to 10, a line that connects the rectangular wires 11 of the left and right slots 12 indicates a state in which the rectangular wires 11 are continuous with each other. Also, in the following description, the order of the rectangular wires 11 indicates the order in which the rectangular wire 11 of each layer is wound around the tooth portion 8.

As shown in FIG. 6, in this embodiment, the rectangular wire 11 of the first layer of the coil 6 is wound from the outside toward the inside of the left and right slots 12 in the motor radial direction. When the rectangular wire 11 of the first layer is wound, the left and right guide members 26 are inserted into the left and right slots 12. Then, the tip ends of the left and right guide members 26 are disposed at a position separated by a predetermined width inward in the motor radial direction from the insulator 5 covering the inner side surface 7c of the yoke portion 7 (a position of the right guide member 26 in FIG. 6(a)). The predetermined width is set to a width that allows insertion of one rectangular wire 11 (for example, a width slightly wider than a length of the rectangular wire 11 in a width direction W). At this time, the tip ends of the left and right guide members 26 are separated from the insulator 5 that covers the side surface 8a of the tooth portion 8.

The first rectangular wire 11 of the first layer is supplied in a state in which the end portion 11a on the start side of winding is locked into the slit (not shown) of the insulator 5 and the nozzle 22 is disposed at the normal position. It is guided by the right guide member 26 and is inserted into an outer end portion of the right slot 12 in the motor radial direction (an end portion on the yoke portion 7 side). Since the first rectangular wire 11 of the first layer has the end portion 1 1a on the start side of winding that is locked into the slit of the insulator 5, it is difficult for the first rectangular wire 11 to laterally slip inward in the motor radial direction. Additionally, the rectangular wire 11 passes between the outer wall portions 13 and 14 of the insulator 5 in the motor axial direction, and is then guided by the left guide member 26 and inserted into the outer end portion of the left slot 12 in the motor radial direction, as indicated by white arrows in FIG. 6(a). At this time, the right guide member 26 moves inward in the motor radial direction (to the position of the right guide member 26 in FIG. 6(a)) so as to be separated from the previously guided rectangular wire 11 by the predetermined width. Then, the rectangular wire 11 passes between the outer wall portions 13 and 14 of the insulator 5 in the motor axial direction, is then guided by the right guide member 26, and is inserted into the second slot of the first layer of the right slot 12, as indicated by the white arrow in FIG. 6(a). At this time, the left guide member 26 moves inward in the motor radial direction so as to be separated from the previously guided rectangular wire 11 by the predetermined width. Such an operation is repeated to alternately move the left and right guide members 26 inward in the motor radial direction by the predetermined width, and the second to seventh rectangular wires 11 of the first layer are wound. In this embodiment, the first to seventh rectangular wires 11 of the first layer are supplied with the nozzle 22 held at the normal position. That is, the first to seventh wires of the first layer of the coil 6 form a normal winding region 29 in which the rectangular wire 11 is wound in a state in which the width direction W of the rectangular wire 11 is along the motor radial direction (the Y direction) of the split core 10 (a state indicated by the two point chain line of FIG. 6(a)) (refer to FIG. 6(b)). In the normal winding region 29 of the first to seventh wires of the first layer of the coil 6, a long side of the rectangular wire 11 in cross section is in surface contact with the insulator 5 that covers the side surface 8a of the tooth portion 8.

After the seventh rectangular wire 11 of the first layer is wound, when the left and right guide members 26 are moved inward in the motor radial direction, the left and right guide members 26 interfere with the flange portion 9 of the split core 10. Therefore, as shown in FIG. 6(b), when the eighth rectangular wire 11 of the first layer is wound, the rectangular wire 11 is wound around the tooth portion 8 without using the left and right guide members 26. The eighth rectangular wire 11 of the first layer is supplied with the nozzle 22 held at an inclined position. That is, as indicated by the two point chain line in FIG. 6(b), the eighth wire of the first layer of the coil 6 forms an inclined winding region (a partial region) 30 in which the rectangular wire 11 is wound in a state in which the width direction W of the rectangular wire 11 is inclined with respect to the motor radial direction (the Y direction) of the split core 10 (hereinafter, this state is simply referred to as a "state in which the rectangular wire 11 is inclined"). In this way, the inclined winding region 30 of the first layer is provided at the eighth wire of the first layer (on the inner end side in the motor radial direction). In this embodiment, in the inclined winding region 30 of the eighth wire of the first layer, when the rectangular wire 11 is wound, the rectangular wire 11 is wound in an inclined state so that the outer side of the rectangular wire 11 in the motor radial direction is located closer to the tooth portion 8 side (the inner side in the motor circumferential direction) than the inner side thereof. In this embodiment, an inner corner portion of the rectangular wire 11 in the motor circumferential direction and an outer corner portion thereof in the motor radial direction (lower side in FIG. 6) in the inclined winding region 30 of the eighth wire of the first layer are in contact with the insulator 5 that covers the side surface 8a of the tooth portion 8. In addition, the inner corner portion of the rectangular wire 11 in the motor circumferential direction and an inner corner portion thereof in the motor radial direction (the upper side in FIG. 6) in the inclined winding region 30 of the eighth wire of the first layer are separated from the insulator 5 that covers the side surface 8a of the tooth portion 8 and are in contact with the insulator 5 that covers the outer side surface 9a of the flange portion 9.

The rectangular wire 11 being wound in the inclined state when the rectangular wire 11 is wound around the tooth portion 8 means that a state of the rectangular wire 11 when the rectangular wire 11 is wound is inclined with respect to the motor radial direction of the split core 10. That is, the width direction W of the rectangular wire 11 in the inclined winding region 30 of the coil 6 after the winding may be inclined with respect to the motor radial direction, or may be along the motor radial direction.

As shown in FIG. 7, the rectangular wire 11 of the second layer of the coil 6 is wound from the inner side to the outer side of the left and right slots 12 in the motor radial direction. The left and right guide members 26 are not used when the rectangular wire 11 of the second layer is wound. The first rectangular wire 11 of the second layer is supplied by the nozzle 22 located in the normal position and is wound around the tooth portion 8 so as to overlap the eighth rectangular wire 11 of the first layer (refer to FIG. 7(a)). Then, the second to eighth rectangular wires 11 of the second layer are supplied by the nozzle 22 located in the normal position and are wound around the tooth portion 8 so as to overlap the seventh to first rectangular wires 11 of the first layer (refer to FIG. 7(b)). That is, as indicated by two point chain lines in FIGS. 7(a) and 7(b), the first to eighth wires of the second layer of the coil 6 form the normal winding region 29 in which the width direction W of the wound rectangular wire 11 is along the motor radial direction (Y direction) of the split core 10. An inner surface of the rectangular wire 11 of the second layer in the motor circumferential direction is in surface contact with an outer surface of the rectangular wire 11 of the first layer in the motor circumferential direction.

As shown in FIG. 8, the rectangular wire 11 of the third layer of the coil 6 is wound from the outer side to the inner side of the left and right slots 12 in the motor radial direction. When the rectangular wire 11 of the third layer is wound, the left and right guide members 26 are inserted into the left and right slots 12. Then, similarly to the first layer, while the left and right guide members 26 are alternately moved inward in the motor radial direction by the predetermined width, the first to seventh rectangular wires 11 of the third layer are wound, and the eighth rectangular wire 11 without using the left and right guide members 26.

The first rectangular wire 11 of the third layer is supplied with the nozzle 22 held at the inclined position. That is, the first wire of the third layer of the coil 6 forms the inclined winding region 30 in which the rectangular wire 11 is wound in an inclined state (a state indicated by the two point chain line in FIG. 8(a)) when the rectangular wire 11 is wound (refer to FIG. 8(b)). The inclined winding region 30 of the third layer is provided on the first wire of the third layer (on the outer end side in the motor radial direction). In this embodiment, in the inclined winding region 30 of the first wire of the third layer, when the rectangular wire 11 is wound, the rectangular wire 11 is wound in the inclined state so that the outer side of the rectangular wire 11 in the motor radial direction is located closer to the tooth portion 8 side (the inner side in the motor circumferential direction) than the inner side thereof. The inner corner portion of the rectangular wire 11 in the motor circumferential direction and the outer corner portion thereof in the motor radial direction (the lower side in FIG. 8) in the inclined winding region 30 of the first wire of the third layer are in contact with the outer surface of the eighth rectangular wire 11 of the second layer in the motor circumferential direction. In addition, the outer corner portion of the rectangular wire 11 in the motor circumferential direction and the outer corner portion thereof in the motor radial direction (the lower side in FIG. 8) in the inclined winding region 30 of the first wire of the third layer are in contact with the insulator 5 that covers the inner side surface 7c of the yoke portion 7.

The second to eighth rectangular wires 11 of the third layer are supplied with the nozzles 22 held at the normal position. That is, as indicated by the two point chain line in FIG. 8(b), the second to eighth wires of the third layer of the coil 6 form the normal winding region 29 in which the rectangular wire 11 is wound in a state in which the width direction W of the rectangular wire 11 is along the motor radial direction (the Y direction) of the split core 10 (refer to FIG. 8(b)). In the normal winding region 29 of the second to eighth wires of the third layer, the inner surface of the rectangular wire 11 in the motor circumferential direction is in surface contact with the outer surface of the rectangular wire 11 of the second layer in the motor circumferential direction.

As shown in FIG. 9, the rectangular wire 11 of the fourth layer of the coil 6 is wound outward in the motor radial direction from a position spaced outward from the flange portion 9 of the split core 10 in the motor radial direction (in this embodiment, a position that is substantially the same as the sixth or seventh wire of the third layer in the motor radial direction). In the fourth layer, when the first rectangular wire 11 is wound, the left and right guide members 26 are used to guide and wind the rectangular wire 11 to a predetermined position, and when the second to sixth rectangular wires 11 are wound, the rectangular wires 11 are wound without using the left and right guide members 26.

The first rectangular wire 11 of the fourth layer is supplied with the nozzle 22 held at the inclined position. That is, the first wire of the fourth layer of the coil 6 forms the inclined winding region 30 (refer to FIG. 9(b)) in which the rectangular wire 11 is wound in the inclined state when the rectangular wire 11 is wound (a state indicated by a two point chain line in FIG. 9(a)). In this embodiment, when the rectangular wire 11 is wound, in the inclined winding region 30 of the first wire of the fourth layer, the rectangular wire 11 is wound in the inclined state so that the inner side of the rectangular wire 11 in the motor radial direction is located closer to the tooth portion 8 side (the inside of the motor circumferential direction) than the outer side thereof. The inner corner portion of the rectangular wire 11 in the motor circumferential direction and the inner corner portion thereof in the motor radial direction (the upper side in FIG. 9) in the inclined winding region 30 of the first wire of the fourth layer are in contact with the outer surface of the rectangular wire 11 of the third layer in the motor circumferential direction.

The second to fifth rectangular wires 11 of the fourth layer are supplied with the nozzles 22 held at the normal position. That is, the second to fifth wires of the fourth layer of the coil 6 form the normal winding region 29 (refer to FIG. 9(b)) in which the rectangular wire 11 is wound in the state in which the width direction W of the rectangular wire 11 is along the motor radial direction (the Y direction) of the split core 10. In the normal winding region 29 of the second to fifth wires of the fourth layer, the inner surface of the rectangular wire 11 in the motor circumferential direction is in surface contact with the outer surface of the rectangular wire 11 of the third layer in the motor circumferential direction.

The sixth rectangular wire 11 of the fourth layer is supplied with the nozzle 22 held at the inclined position. That is, the sixth wire of the fourth layer forms the inclined winding region 30 in which the rectangular wire 11 is wound in the inclined state (the state indicated by the two point chain line in FIG. 9(b)) when the rectangular wire 11 is wound. The inclined winding region 30 of the fourth layer is provided at the first wire (the inner end side in the motor radial direction) of the fourth layer and the sixth wire (the outer end side in the motor radial direction) of the fourth layer. In this embodiment, in the inclined winding region 30 of the sixth wire of the fourth layer, when the rectangular wire 11 is wound, the rectangular wire 11 is wound in the inclined state so that the outer side of the rectangular wire 11 in the motor radial direction is located more inward in the motor circumferential direction than the inner side thereof. The inner side surface of the rectangular wire 11 in the inclined winding region 30 of the sixth wire of the fourth layer in the motor circumferential direction is in surface contact with the outer surface of the rectangular wire 11 of the third layer in the motor circumferential direction.

As shown in FIG. 10, the rectangular wire 11 of the fifth layer of the coil 6 is wound from the outer side to the inner side of the left and right slots 12 in the motor radial direction. When the rectangular wire 11 of the fifth layer is wound, the left and right guide members 26 are inserted into the left and right slots 12. Then, similarly to the first and third layers, the right and left guide members 26 are alternately moved inward in the motor radial direction by the predetermined width, and the first and second rectangular wires 11 of the fifth layer are wound (refer to FIGS. 10(a) and 10(b)). The rectangular wire 11 of the fifth layer is supplied with the nozzle 22 held at the normal position. That is, the first and second wires of the fifth layer of the coil 6 form the normal winding region 29 (refer to FIG. 10(b)) in which the rectangular wire 11 is wound in the state in which the width direction W of the rectangular wire 11 is along the motor radial direction (the Y direction) of the split core 10 (a state indicated by two point chain lines in FIGS. 10(a) and 10(b)). In the normal winding region 29 of the fifth layer, the inner side surface of the rectangular wire 11 in the motor circumferential direction is in surface contact with the outer surface of the rectangular wire 11 of the fourth layer in the motor circumferential direction.

In the winding structure and winding method configured as described above, when the rectangular wire 11 in a partial region (the inclined winding region 30) of the coil 6 is wound, the rectangular wire 11 is wound in the state in which the width direction W of the rectangular wire 11 is inclined with respect to the motor radial direction. For example, as shown in FIG. 6(b), in the inclined winding region 30 of the eighth wire of the first layer, the rectangular wire 11 is inclined when wound. When the eighth rectangular wire 11 is wound, and a force (a winding force) that is applied inward in the motor circumferential direction acts on the rectangular wire 11 while the corner portions of the rectangular wire 11 are in contact with the tooth portion 8 side, a force outward in the motor radial direction (the lower side in FIG. 6(b)) is generated in the rectangular wire 11. Therefore, since the force outward in the motor radial direction can be applied from the eighth rectangular wire 11 to the adjacent seventh rectangular wire 11, the first to eighth rectangular wires 11 of the first layer can be brought into close contact with each other, a winding fixing force can be improved, and stability of the winding wire can be improved. Moreover, a space between the rectangular wires 11 can be suppressed, and thus the space factor of the winding wires can be increased.

In addition, in the inclined winding region 30 of the eighth wire of the first layer, the rectangular wire 11 is inclined when the rectangular wire 11 is wound. Since the rectangular wire 11 on the end side of winding the layer of the coil 6 is inclined in this way, even when a space between the seventh rectangular wire 11 of the first layer and the flange portion 9 of the split core 10 is narrower than a width of the rectangular wire 11, interference between the edge portion (the corner portion) of the eighth rectangular wire 11 and the seventh rectangular wire 11 can be avoided, and thus the eighth rectangular wire 11 can be inserted deeply into the space from the edge portion. Therefore, it is possible to suppress protrusion of the eighth rectangular wire 11 outward in the motor circumferential direction, and thus the winding can be stably performed. In addition, it is possible to reduce a gap of the eighth rectangular wire 11 inward in the motor circumferential direction, and thus the space factor of the winding wires can be increased.

Further, as shown in FIG. 8(a), in the inclined winding region 30 of the first wire of the third layer, when the rectangular wire 11 is wound, the rectangular wire 11 is wound in the inclined state so that the outer side of the rectangular wire 11 in the motor radial direction is located closer to the tooth portion 8 side than the inner side thereof. When the first rectangular wire 11 is wound, and a force inward in the motor circumferential direction is applied to the rectangular wire 11 in a state in which the corner portion of the rectangular wire 11 is in contact with the second layer, a force outward in the motor radial direction (the lower side in FIG. 6) acts on the contacting corner portion of the rectangular wire 11. In this way, since a force outward in the motor radial direction can be applied to the first rectangular wire 11 by inclining the rectangular wire 11 on the start side of wounding of the layer wound from the outside to the inside in the motor radial direction of the coil 6, the collapse of the winding of the rectangular wire 11 due to lateral shift inward in the motor radial direction can be suppressed, and the stability of the winding can be improved.

Further, as shown in FIG. 9(a), in the inclined winding region 30 of the first wire of the fourth layer, when the rectangular wire 11 is wound, the rectangular wire 11 is wound in the inclined state so that the inner side of the rectangular wire 11 in the motor radial direction is located closer to the tooth portion 8 side than the outer side thereof. When the first rectangular wire 11 is wound, and a force inward in the motor circumferential direction acts on the rectangular wire 11 in the state in which the corner portion of the rectangular wire 11 is in contact with the third layer, a force inward (the upper side in FIG. 9) in the motor radial direction acts on the contacting corner portion of the rectangular wire 11. In this way, since it is possible to apply the force inward in the motor radial direction to the first rectangular wire 11 by inclining the rectangular wire 11 on the start side of winding of the layer wound from the inside to the outside in the motor radial direction of the coil 6, it is possible to suppress the collapse of the winding due to the lateral shift of the rectangular wire 11 to the outer side in the motor radial direction, and the stability of the winding can be improved.

Also, the inclined winding region 30 of the coil 6 is provided at the end portion (the inner end or outer end) of the layer of the coil 6 in the motor radial direction. As described above, since the inclined winding region 30 of the coil 6 is provided at the end portion of the coil 6 in the motor radial direction at which the collapse of the winding due to the lateral shift is likely to occur, the collapse of the winding due to the lateral shift can be suppressed accurately.

Further, in the winding apparatus 20 configured as described above, the nozzle 22 that supplies the rectangular wire 11 to the side of the split core 10 supported by the core support part 25 can tilt the rectangular wire 11 in the wire circumferential direction. Therefore, since the rectangular wire 11 can be inclined when the rectangular wire 11 is wound at a location at which the collapsed of the winding due to the lateral shift of the split core 10 is likely to occur, the stability of the winding can be improved. In addition, in a case in which the rectangular wire 11 is wound in a location at which the space for inserting the rectangular wire 11 is narrow, since the rectangular wire 11 can be inclined, the interference of the edge portions of the rectangular wire 11 with the adjacent rectangular wires 11 and the like can be suppressed, the protrusion of the rectangular wire 11 to the outer side in the motor circumferential direction can be suppressed, and thus the winding can be performed stably.

As described above, according to this embodiment, the stability of the winding the rectangular wire 11 can be improved with a simple configuration in which the rectangular wire 11 is inclined when the rectangular wire 11 is wound around the tooth portion 8.

In this embodiment, although the inclined winding region 30 of the coil 6 is provided on both end sides of the coil 6 in the motor radial direction, the disclosure is not limited thereto, and the inclined winding region 30 of the coil 6 may be provided on at least one end side of the coil 6 in the motor radial direction.

Further, in this embodiment, although the inclined winding region 30 of the coil 6 is provided in a plurality of layers of the coil 6, the disclosure is not limited thereto, and the inclined winding region 30 of the coil 6 may be provided in at least one layer of the coil 6.

Further, in this embodiment, although the winding method, winding structure, and winding apparatus of the rectangular wire according to the present disclosure are applied to the winding method, winding structure, and winding apparatus of the rectangular wire for the motor 1, the disclosure is not limited thereto, and it may be applied to winding methods, winding structures, and winding apparatus of rectangular wires for other rotating electric machines. For example, the disclosure may be applied to winding methods, winding structures, and winding apparatus of rectangular wires for alternators (generators) or the like.

It will be apparent to those skilled in the art that various modifications and variations can be made to the disclosed embodiments without departing from the scope or spirit of the disclosure. In view of the foregoing, it is intended that the disclosure covers modifications and variations provided that they fall within the scope of the following claims and their equivalents.

### [Reference Signs List]

1 Motor
4 Stator core (iron core)
6 Coil
7 Yoke portion
8 Tooth portion
9 Flange portion
10 Split core (iron core)
11 Rectangular wire
12 Slot
20 Winding apparatus
22 Nozzle (winding wire supply part)
25 Core support part (iron core support part)
30 Inclined winding region (partial region)

## Claims

1. A winding method of a rectangular wire, which includes forming a coil (6) by winding the rectangular wire (11) around a tooth portion (8) that extends inward in a radial direction from a yoke portion (7) located outward in the radial direction, wherein
when the rectangular wire (11) is wound around a partial region of the coil, the rectangular wire (11) is wound in a state in which a width direction of the rectangular wire (11) is inclined with respect to the radial direction.

2. The winding method according to claim 1, wherein the partial region of the coil (6) is a region provided on at least one end side in the radial direction of at least one layer of the coil.

3. The winding method according to claim 1 or 2, wherein:
the partial region of the coil (6) is provided in a layer wound from one side of the coil (6) to the other side in the radial direction; and
when the rectangular wire (11) is wound around the partial region of the coil (6), the rectangular wire is wound in an inclined state so that the one side of the rectangular wire (11) is located closer to the tooth portion (8) than the other side.

4. A winding structure of a rectangular wire (11), comprising:
an iron core having a yoke portion (7) disposed outward in a radial direction and configured to extend in a motor circumferential direction, a tooth portion (8) configured to extend inward in the radial direction from a middle portion of the yoke portion (7) in the motor circumferential direction, and a flange portion (9) configured to extend from an inner end portion of the tooth portion (8) in the radial direction to both sides thereof in the motor circumferential direction; and
a coil (6) disposed in a slot (12) defined by the yoke portion (7), the tooth portion (8), and the flange portion (9) of the iron core and formed by winding the rectangular wire (11) in multiple layers around the tooth portion (8),
wherein the rectangular wire (11) on at least one end side in the radial direction of at least one layer of the coil (6) is formed so that a width direction of the rectangular wire (11) is inclined with respect to the radial direction.

5. A winding apparatus, which winds a rectangular wire (11) around a tooth portion (8) of an iron core, the winding apparatus comprising:
an iron core support part (25) configured to support the iron core (4); and
a winding wire supply part (22) configured to supply the rectangular wire (11) toward the iron core supported by the iron core support part (25),
wherein the winding wire supply part (22) is configured to tilt the rectangular wire (11) in a circumferential direction of the rectangular wire (11).
